# EUROPÄISCHE PATENTSCHRIFT

(11) **EP 0 815 371 B1**
(45) Veröffentlichungstag und Bekanntmachung des Hinweises auf die Patenterteilung: **19.02.2003**
(21) Anmeldenummer: 96907420.2
(22) Anmeldetag: 09.03.1996
(51) Int. Cl.: F16J 15/12

(54) **DICHTUNGSANORDNUNG FÜR EINE FLACHE FLANSCHVERBINDUNG**
SEALING ARRANGEMENT FOR A FLAT FLANGE CONNECTION
DISPOSITIF D'ETANCHEITE DESTINE A UN ASSEMBLAGE PLAT A BRIDE

(30) Priorität: 15.03.1995 DE 29504402 U; 31.03.1995 DE 29505539 U
(43) Veröffentlichungstag der Anmeldung: 07.01.1998
(73) Patentinhaber: Jung, Alfred, 50859 Köln (DE)
(72) Erfinder: Jung, Alfred, 50859 Köln (DE)
(74) Vertreter: Werner, Hans-Karsten, Dr.Dipl.-Chem.
(86) Internationale Anmeldenummer: EP9601027
(87) Internationale Veröffentlichungsnummer: WO96028671

(56) Entgegenhaltungen:
- EP-A- 0 191 171
- GB-A- 2 170 283

## Beschreibung

Die Erfindung betrifft eine Dichtungsanordnung für eine flache Flanschverbindung nach dem Oberbegriff des Anspruchs 1.

Eine solche Dichtungsanordnung geht aus der DE 41 39 453 A1 hervor. Bei ihr weisen die beiden Dichtungsaufnahmeflächen des Grundkörpers ringförmige Zähne auf. Es ist auf jeder der beiden Seiten des Grundkörpers der radial innenliegende Zahn und der radial außenliegende Zahn höher ausgebildet als die dazwischenliegenden Zähne. Dies bewirkt beim Einbau der Dichtung, die aus einem Grundkörper, der zweckmäßig metallisch ist und den beiden Dichtungsauflagen besteht, eine Kammerung der Dichtungsauflagen, d.h. die Dichtungsauflagen sind zwischen dem jeweiligen Innenund Außenzahn eingebettet und es kann die Dichtungsauflage nicht über den Innen- oder Außenzahn nach innen bzw. außen kriechen.

Die Ringzähne im Bereich der Dichtungsaufnahmeflächen werden bei dem bekannten Stand der Technik durch Drehen hergestellt. Das bedingt Spezialwerkzeuge und entsprechend lange Bearbeitungszeiten.

Dichtungsanordnungen mit Ringzähnen unterscheiden sich grundsätzlich von Dichtungsanordnungen aus Metall mit Kraftnebenschlußdichtungen, bei denen die gewünschte Flächenpressung an den Dichtflächen durch Kraftnebenschluß vermindert wird. Dies vermindert aber auch die Dichtungseigenschaften. Die gattungsgemäßen Dichtungsanordnungen mit Ringzähnen weisen diesen Nachteil nicht auf, dafür sollten sie aber stets mit Drehmomentschlüsseln angezogen werden.

Die aus der DE 41 39 453 A1 bekannte Dichtung mit Ringzähnen hat sich sehr bewährt, jedoch ist sie in der Herstellung wegen der dort vorhandenen Ringzähne im Bereich der Dichtungsauflageflächen relativ aufwendig. Weiterhin war man bisher der Meinung, daß die Zähne auf den Dichtungsauflageflächen unbedingt notwendig seien, um ein gutes Leckwertverhalten zu erzielen.

Der Erfindung liegt die Aufgabe zugrunde, für flache Flanschverbindungen mit Ringzähnen eine verbesserte Dichtungsanordnung zu schaffen, die bei mindestens gleichem Leckwertverhalten, gleicher Ausblassicherheit und gleicher Bauteilsicherheit wie bei der Anordnung nach dem bekannten Stand der Technik kostengünstiger hergestellt werden kann. Gleichzeitig soll die Einbauhöhe verringert und die Gefahr der Kerbspannrißbildung und der Spannungsrißkorrosion vermindert werden.

Diese Aufgabe wird durch die Merkmale des Anspruchs 1 gelöst.

Dadurch, daß bei der erfindungsgemäßen Anordnung jede Dichtungsaufnahmefläche eben ausgebildet ist, entfällt das aufwendige Drehen der Ringzähne im Bereich der Dichtungsaufnahmeflächen.

Das Weglassen der Ringzähne in diesem Bereich führt überraschenderweise zu keinem ungünstigeren Leckverhalten. Durch das Fehlen dieser Ringzähne kann sich vielmehr die Dichtungsauflage im gesamten Bereich der Dichtungsauflagefläche innerhalb der Kammer gleichmäßig verteilen und wird hieran nicht durch Zähne gehindert. Bei idealem Einbau einer Dichtung, wie er bei geringem Druck vorliegenden kann, bleiben die ebenen Flanschflächen praktisch parallel zueinander. Hohe Anzugsmomente der Schrauben hingegen führen dazu, daß die Flanschflächen nicht mehr exakt parallel zueinander verlaufen, sie sind vielmehr radial außen näher beieinander als radial innen. Durch diesen Effekt wird ebenfalls ein Fließen der Dichtungsauflagen herbeigeführt. Es ist notwendig, daß gerade bei den in der Praxis tatsächlich vorkommenden Fällen des nichtidealen Einbaus die Dichtungsauflagen innerhalb der jeweiligen Kammer frei fließen können.

Dadurch wird ein gleichmäßiger Flächenpressungsdruck über den gesamten Bereich der Dichtungsaufnahmefläche erreicht. Dies ist im Falle des Vorhandenseins von Ringzähnen im Bereich der Dichtungsaufnahmeflächen nicht in ausreichendem Maße möglich, denn die Zähne verhindern das Fließen der Dichtungsauflage, wodurch sich ein unterschiedlicher Flächenpressungsdruck ergibt. Dieser Effekt der unterschiedlichen Flächenpressungsdrücke ist bei nicht gekammerten Kammprofildichtungen, die also über den gesamten Bereich der Dichtungsauflageflächen Ringzähne, aber keine erhöhten Innen- und Außenzähne aufweisen, noch stärker ausgeprägt.

Bei der erfindungsgemäßen Dichtungsanordnung ergibt sich durch das Vorliegen ebener Dichtungsauflageflächen auch eine geringere Einbauhöhe, da der Abstand zwischen den beiden Dichtungsaufnahmeflächen kleiner gewählt werden kann als bei einer Dichtung mit Ringzähnen im Bereich der Dichtungsauflageflächen oder bei einer herkömmlichen Kammprofildichtung (ohne Innen- und Außenzähne).

Ein weiterer, nicht vorhersehbarer Vorteil der erfindungsgemäßen Dichtungsvorrichtung besteht darin, daß der Graphit nicht mit den Metallflächen der Dichtung verbackt, so daß sie sich preiswert und einfach reinigen und wiederverwenden läßt.

Eine besonders günstige Herstellung ergibt sich durch Fräsen oder Prägen der Dichtungsaufnahmeflächen und der Innen- und Außenzähne. Dadurch entfällt das Drehen zur Herstellung der Zähne und der ebenen Dichtungsaufnahmefläche. Bei den bisher bekannten Grundkörpern tritt in bestimmten Anwendungsfällen Spannungskorrosion auf. Diese Gefahr ist bei gefrästen oder geprägten Grundkörpern nicht in dem Maße gegeben, da das Fräswerkzeug oder Prägewerkzeug eine andere Oberfläche liefert als sie beim Drehen entsteht. Dies gilt sowohl für den Makrobereich, denn ein Prägewerkzeug weist eine etwas abgerundete Oberfläche auf als der Drehmeißel, als auch für den Mikrobereich. Eine gedrehte Fläche ist im Mikrobereich nicht so glatt wie eine geprägte, somit kann die gedrehte Fläche eher zu Spannungsrißkorrosion führen. Die durch Prägen entstandene Oberfläche ist also weniger gefährdet hinsichtlich der Entstehung von Spannungsrißkorrosion aber auch hinsichtlich Kerbspannungsrißbildung.

Die neue Dichtungsanordnung ist in den anliegenden Figuren näher erläutert.
Figur 1: Ausschnitt einer typischen Dichtung im Querschnitt im nicht eingebautem Zustand;
Figur 2: Die Dichtung nach Figur 1 bei idealem Einbau;
Figur 3: Die Dichtung nach Figur 1 bei tatsächlichem Einbau (schematisiert).

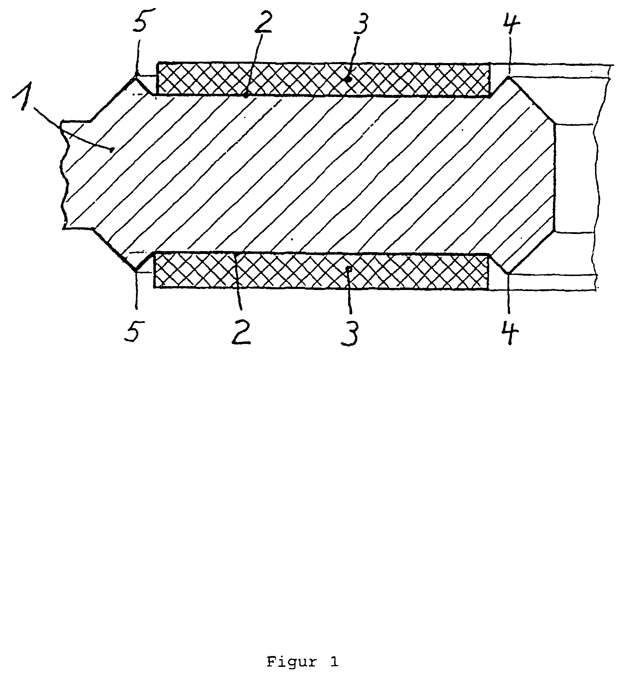

Figur 1 zeigt eine Dichtung in nicht eingebautem Zustand. Der Grundkörper (1), der vorzugsweise aus Metall besteht, besitzt auf beiden Seiten ebene Dichtungsauflageflächen (2), auf die Dichtungsauflagen (3) aufgeklebt sind. Sie bestehen insbesondere aus Graphit oder PTFE. Der Kleber wird zweckmäßig durch Sprühen aufgebracht und sollte chloridfrei sein, um Spannungsrißkorrosion möglichst zu verhindern. Radial innen und radial außen befinden sich an den Dichtungsaufnahmeflächen je ein innerer Ringzahn (4) und ein äußerer Ringzahn (5).

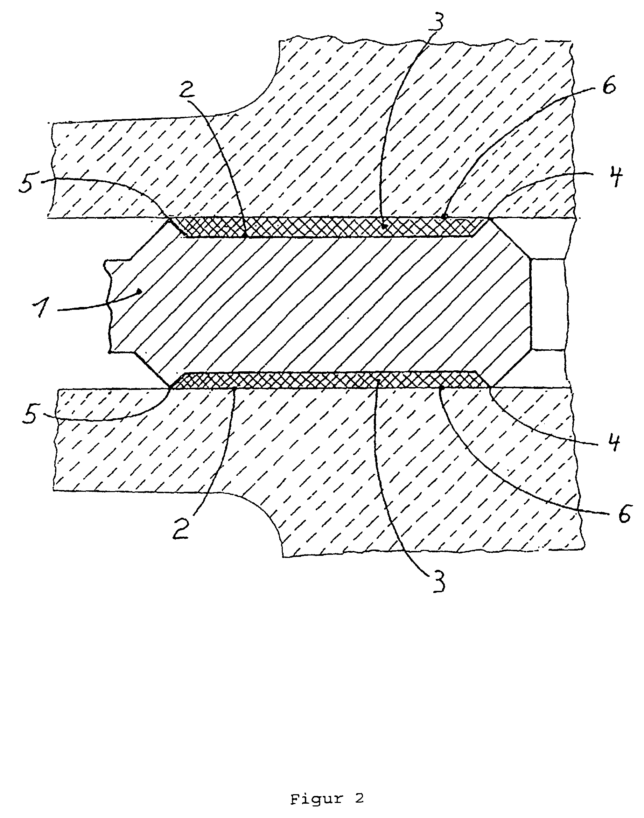

Figur 2 zeigt die Dichtung nach Figur 1 in eingebautem Zustand, und zwar bei idealem Einbau, wie er zum Beispiel bei geringen Drücken vorliegen kann. In diesem Fall verlaufen die Flanschauflageflächen (6) praktisch parallel zueinander und somit auch die beiden Auflageflächen an einer Dichtungsauflage. Jede Dichtungsauflage ist zwischen Innen- und Außenzahn gekammert, wobei sie sich an diese Zähne anlegt.

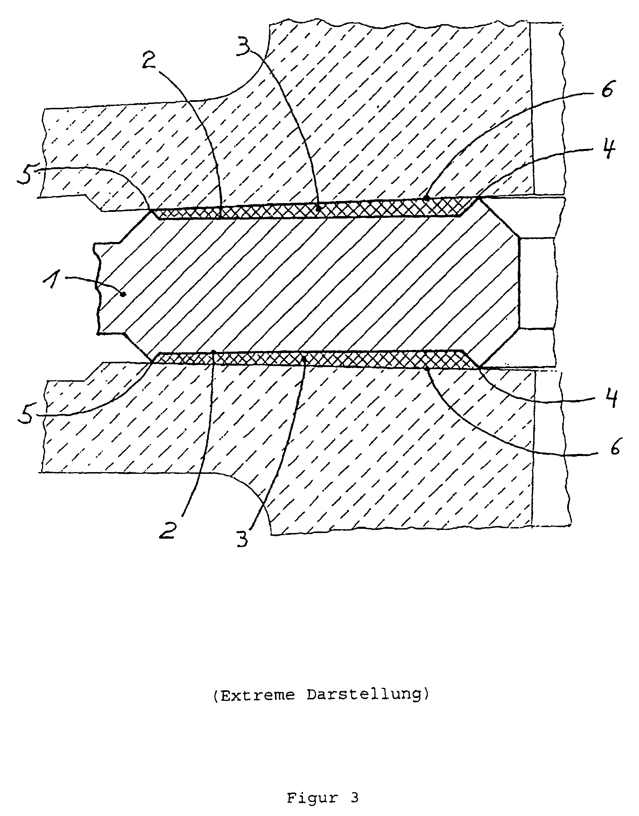

Figur 3 zeigt in einer etwas überzeichneten Darstellung die Dichtung bei tatsächlichem Einbau, wie er zum Beispiel bei hohen Anzugsmomenten sowie hohen Drücken vorliegen kann. Die Flanschauflageflächen verlaufen nicht exakt parallel, sondern liegen außen näher beieinander als innen. Gerade für diesen Fall ist die Möglichkeit des Fließens der Dichtungsauflagen sehr bedeutsam, damit sich eine gleichmäßige Flächenpressung einstellen kann.

Besonders gute Eigenschaften weist eine Dichtung auf, bei der, wie in Figur 3 dargestellt, der innere Ringzahn (4) geringfügig höher ausgebildet ist als der äußere Ringzahn (5). Der Höhenunterschied der Ringzähne beträgt je nach Flanschgröße und Abstand der Ringzähne voneinander 10 bis 100 µm. Dies bewirkt, daß bei Flanschverbindungen für sehr hohe Drücke, die dementsprechend sehr fest miteinander verschraubt sind, die Dichtungsauflagen nach außen und nach innen optimal abgeschlossen sind.

## Patentansprüche

1. Dichtungsanordnung für eine flache Flanschverbindung mit einem flachen Grundkörper (1), der beidseitig Dichtungsaufnahmeflächen (2) aufweist, mit je einem inneren Ringzahn und je einem äußeren Ringzahn, die jede Dichtungsaufnahmefläche an ihrer radial innenliegenden Seite bzw. außenliegenden Seite begrenzen, und mit zwei ringförmigen Dichtungsauflagen (3), die jeweils auf die Dichtungsaufnahmeflächen aufgeklebt sind und die in eingebautem Zustand zwischen den Ringzähnen eingebettet und gekammert sind, **dadurch gekennzeichnet, daß** jede Dichtungsaufnahmefläche eben ausgebildet ist.

2. Dichtungsanordnung nach Anspruch 1, **dadurch gekennzeichnet, daß** jede Dichtungsaufnahmefläche und die inneren und äußeren Ringzähne durch Fräsen oder Prägen hergestellt sind.

3. Dichtungsanordnung nach Anspruch 1 oder 2, dadurch gekennzeichnet, daß der innere Ringzahn (4) geringfügig höher ausgebildet ist als der äußere Ringzahn (5).

4. Verfahren zur Herstellung von Dichtungsanordnungen gemäß Anspruch 1 bis 3, **dadurch gekennzeichnet, daß** die Ringzähne gefräst oder geprägt werden.

## Claims

1. A seal configuration for a flat flanged joint with a flat base part (1) having seal reception surfaces (2) on either side, each with an inner annular tooth and an outer annular tooth which bound either seal reception surface on its radial inside and outside, respectively, and having two annular seal bearings (3) which are respectively adhered to the seal reception surfaces and which, in a mounted condition, are embedded and confined in a chamber between the annular teeth, **characterized in that** each seal reception surface has an even design.

2. The seal configuration according to claim 1, **characterized in that** each seal reception surface and the inner and outer annular teeth are prepared by milling or embossing.

3. The seal configuration according to claim 1 or 2, **characterized in that** the inner annular tooth (4) has a slightly higher design than the outer annular tooth (5).

4. A method for the preparation of seal configurations according to claims 1 to 3, **characterized in that** said annular teeth are milled or embossed.

## Revendications

1. Dispositif d'étanchéification pour raccord par collerette plate avec un corps de base plat (1), qui présente sur ses deux côtés des surfaces de réception de garniture d'étanchéité (2) munies chacune d'une dent annulaire interne et chacune d'une dent annulaire externe, qui limitent chaque surface de réception de garniture d'étanchéité sur son côté situé à l'intérieur respectivement à l'extérieur sur l'axe radial et avec deux revêtements d'étanchéité annulaires (3), qui sont à chaque fois collés sur les surfaces de réception de garniture d'étanchéité et qui dans leur état monté sont encastrés et enfermés entre les dents annulaires,
**caractérisé en ce que** chaque surface de réception de garniture d'étanchéité est formée de manière plane.

2. Dispositif d'étanchéification selon la revendication 1, **caractérisé en ce que** chaque surface de réception de garniture d'étanchéité ainsi que les dents annulaires interne et externe sont produites par fraisage ou estampage.

3. Dispositif d'étanchéification selon la revendication 1 ou 2, **caractérisé en ce que** la dent annulaire inteme (4) est formée de manière légèrement plus haute que la dent annulaire externe (5).

4. Procédé de production de dispositifs d'étanchéification selon les revendications 1 à 3, **caractérisé en ce que** les dents annulaires sont fraisées ou estampées.
